# EUROPEAN PATENT SPECIFICATION

(11) **EP 4 138 163 B1**
(45) Date of publication and mention of the grant of the patent: **20.03.2024**
(21) Application number: 21191497.3
(22) Date of filing: 16.08.2021
(51) Int. Cl.: H01M 8/04029, H01M 8/2483, H01M 8/2484, H01M 8/04044, H01M 8/10

(54) **INTERNAL COOLANT DEGASSING FOR FUEL CELL STACK**
INTERNE KÜHLMITTELENTGASUNG FÜR BRENNSTOFFZELLENSTAPEL
DÉGAZAGE INTERNE DU FLUIDE CALOPORTEUR POUR EMPILEMENT DE PILES À COMBUSTIBLE

(43) Date of publication of application: 22.02.2023
(73) Proprietor: AVL List GmbH, 8020 Graz (AT); AVL Fuel Cell Canada Inc., Burnaby, BC V5A 4W2 (CA)
(72) Inventor: Gallagher, Emerson, Vancouver, V6L 2T5 (CA)
(74) Representative: Gamper, Bettina

(56) References cited:
- JP-A- 2006 032 054
- JP-A- 2010 272 231
- US-A1- 2007 154 744

## Description

This invention relates to designs and constructions internal to fuel cell stacks for purposes of coolant degassing. In particular, it relates to designs and constructions for solid polymer electrolyte fuel cell stacks in which the ports for the various stack fluids are provided on the lower end plate.

Fuel cells are devices that generate electric power by electrochemically converting fuel and oxidant reactants, such as hydrogen and oxygen or air. A solid polymer electrolyte fuel cell is one type of fuel cell which employs a proton conducting, solid polymer membrane electrolyte between cathode and anode electrodes. The electrodes typically comprise appropriate catalysts to promote the electrochemical reactions taking place at each electrode. A structure comprising a solid polymer membrane electrolyte sandwiched between these two electrodes is known as a membrane electrode assembly (MEA). In a common embodiment, the MEA comprises a catalyst coated membrane (CCM) and gas diffusion layers (GDLs) applied on each side of the CCM. The CCM is a convenient subassembly in which appropriate catalyst compositions have been applied and bonded to either side of the membrane electrolyte. The GDLs are provided to improve both the distribution of the fluid reactants to the electrodes and the removal of fluid by-products from the electrodes.

In a typical solid polymer electrolyte fuel cell, flow field plates comprising numerous fluid distribution channels for the reactants are provided on either side of a MEA to distribute fuel and oxidant to the respective electrodes and to remove reaction by-products from the fuel cell. Water is the primary by-product in a cell operating on hydrogen and air reactants. Because the output voltage of a single cell is of order of 1V, a plurality of cells is usually stacked together in series for commercial applications in order to provide a higher output voltage. Fuel cell stacks can be further connected in arrays of interconnected stacks in series and/or parallel for use in automotive applications and the like.

Along with water, heat is a significant by-product from the electrochemical reactions taking place within the fuel cell. Means for cooling a fuel cell stack is thus generally required. Stacks designed to achieve high power density (e.g. automotive stacks) typically circulate liquid coolant throughout the stack in order to remove heat quickly and efficiently. To accomplish this, coolant flow fields comprising numerous coolant channels are also typically incorporated in the flow field plates of the cells in the stacks. The coolant flow fields are typically formed on the electrochemically inactive surfaces of both the anode side and cathode side flow field plates and, by appropriate design, a sealed coolant flow field is created when both anode and cathode side plates are mated together into a bipolar flow field plate assembly.

To efficiently manufacture such fuel cell stacks, numerous identical cell assemblies known as unit cell assemblies are usually prepared with an appropriate design such that they can simply be stacked, one on top of the other, to complete most of the assembly of the stack. Different end cell assemblies may be used at the ends of the stack to properly complete the assembly.

During operation of such fuel cell stacks, for various reasons bubbles of gas may form and collect within the circulating liquid coolant. If allowed to continue to excess, the accumulating gas bubbles can create problems with circulating the coolant properly and with evenly cooling the fuel cell. Thus, some means of efficiently removing gas bubbles within the circulating coolant is usually included in the fuel cell stack and balance of plant.

Prior art options for removing gas from the coolant have included adding coolant bleed ports to hardware at that end of the stack opposite the end comprising all the ports and manifolds for the various stack fluids (e.g. fuel, oxidant, and coolant inlet and outlet fluids). For instance, such a design is employed in commercial fuel cell stacks made by Ballard Power Systems. However, incorporating a coolant bleed port in this end hardware means that it becomes a wetted component, thereby restricting the material choices available for this end hardware, as well as requiring sealing surfaces to be provided thereto. Further, it also requires additional fluid connections and associated hosing in order to connect that coolant bleed port to the rest of the coolant system. Various other options have been disclosed in the art for removing gas in the coolant. In JP 2004247258 for instance, an exemplary internal design is disclosed for collecting and routing the gas out of the fuel cell stack

While various solutions are known in the art for degassing the circulating coolant in fuel cell stacks, there remains a continuing desire for additional simplification and efficiency in achieving this function.

Further coolant degassing designs for a fuel cell stack are for instance also known from JP 2010 272231 A, JP 2006 032054 A and US 2007/154744 A1.

In the present invention, disclosed are fuel cell stack designs comprising internal structures for degassing circulating coolant. In particular, the invention is for solid polymer electrolyte fuel cell stacks in which the ports for the various stack fluids are desirably all provided on the lower end plate. With this construction, the upper end plate need not be compatible with the stack fluids and fluid seals are not required at the upper end of the stack.

Specifically, a fuel cell stack of the invention comprises a plurality of essentially planar solid polymer electrolyte fuel cells stacked in series in which the plane of the fuel cells is oriented horizontally in the fuel cell stack. Further, each fuel cell comprises a membrane electrode assembly comprising an anode and a cathode on opposite sides of a solid polymer membrane electrolyte; a fuel flow field plate with a fuel flow field on a first major surface adjacent the anode in the membrane electrode assembly; and an oxidant flow field plate with an oxidant flow field on a first major surface adjacent the cathode in the membrane electrode assembly. The fuel cell stack further comprises a plurality of coolant flow fields between each pair of adjacent fuel cells in the fuel cell stack in which each coolant flow field is formed by mating the second major surface of a fuel flow field plate in the pair with the second major surface of an adjacent oxidant flow field plate in the pair. The fuel cell stack also comprises an upper end plate at the upper end of the fuel cell stack; a lower end plate at the lower end of the fuel cell stack; and a set of end plate fluid ports in one of the upper and lower end plates for each of the stack fluids in which the stack fluids comprise a fuel inlet fluid, a fuel outlet fluid, an oxidant inlet fluid, an oxidant outlet fluid, a coolant inlet fluid, a coolant outlet fluid, and a coolant degassing fluid. The fuel cell stack of the invention is characterized in that:
the lower end plate comprises the set of end plate fluid ports;
except for the uppermost of the fuel and oxidant flow field plates in the fuel cell stack, each of the fuel and oxidant flow field plates comprises a set of flow field plate ports for each of the stack fluids and each set of flow field plate ports aligns with the other sets of flow field plate ports in the fuel cell stack to create respective manifolds for each stack fluid that are fluidly connected to their respective end plate fluid ports;
the upper end plate is absent any of the set of end plate fluid ports;
the uppermost flow field plate in the stack is absent any of the set of flow field plate ports;
the degassing coolant manifold for the coolant degassing fluid is fluidly connected to one of the coolant inlet and the coolant outlet manifolds in the fuel cell stack.

According to the invention, the degassing coolant manifold is fluidly connected to the coolant outlet manifold in the fuel cell stack. The coolant degassing flow field plate ports are formed adjacent the coolant outlet flow field plate ports in the fuel and oxidant flow field plates, and thus whereby the degassing coolant manifold is adjacent the coolant outlet manifold. The degassing coolant manifold is fluidly connected to the coolant outlet manifold via a channel formed in the uppermost of the fuel and oxidant flow field plates in the fuel cell stack.

For proper functioning, the hydraulic diameter of the degassing coolant manifold is generally small enough to result in slug flow of a mixture of gas and coolant therein.

Advantageously, use of the invention allows for the use of upper end plate materials that are incompatible with contact with the stack fluids. Further, the requirement for many of the customary seals at the upper end plate is obviated.

The invention is especially suitable then for fuel cell stacks in which location of the various other stack fluid ports is preferably on the lower end plate, e.g. certain heavy duty marine fuel cell stacks.

These and other aspects of the invention are evident upon reference to the attached Figures and following detailed description.

Figures 1a, 1b and 1c show schematic views of the reactant side of a representative flow field plate (either fuel or oxidant) used in a bipolar plate assembly, the coolant side of the opposing flow field plate in a bipolar plate assembly, and the uppermost of the fuel and oxidant flow field plates in a fuel cell stack of the invention respectively.

Figure 2 shows a simplified schematic cross-sectional side view of a fuel cell stack of the invention and comprising the various plates shown in Figure 1.

In this specification, words such as "a" and "comprises" are to be construed in an openended sense and are to be considered as meaning at least one but not limited to just one.

Herein, the term "essentially planar" is used in the context of fuel cell configuration and is intended to refer to fuel cells that are flat or almost flat. For instance, it is intended to include cells having minor out-of-plane features (e.g. for alignment purposes) but is particularly intended to distinguish over significantly non-planar configurations (e.g. zigzag or spiral).

The term "slug flow" has the meaning commonly used in fluid mechanics involving two phase fluid flow of both a liquid and a gas in a pipe and is characterized by intermittent flow of liquid "slugs" and gas bubbles therein.

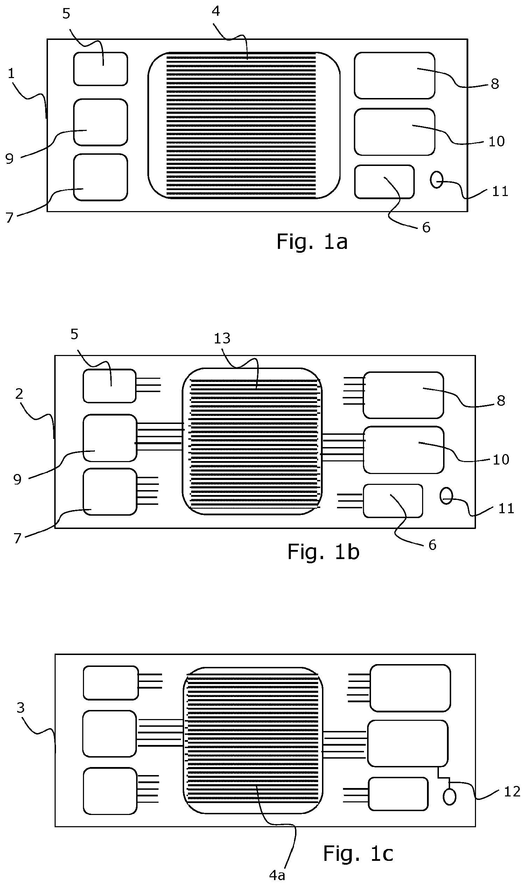

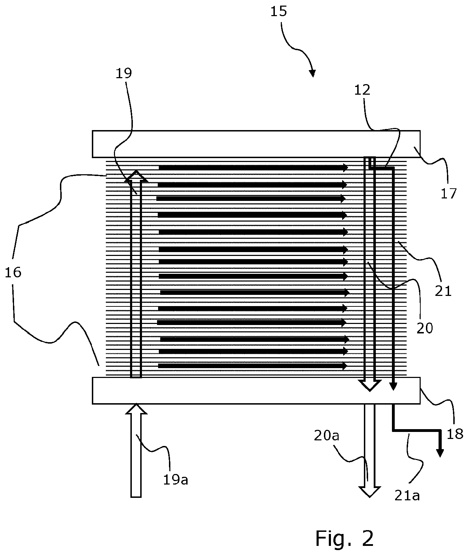

An exemplary embodiment of the invention is shown in the schematic views of a heavy duty marine fuel cell stack in Figures 1 and 2. Such a stack may be suitable as a relatively large power supply for applications including ferries or cargo vessels.

Figures 1a through 1c show a variety of views of representative essentially planar flow field plates suitable for use in the invention. In Figure 1a, a schematic is shown of the major surface comprising the reactant flow field ("reactant side") of a flow field plate used in the numerous bipolar plate assemblies making up the series stack. (The reactant side can be either that for the fuel or for the oxidant reactants.) In Figure 1b, a schematic is shown of the major surface comprising the coolant flow field ("coolant side") of the opposing flow field plate that mates with that of Figure 1a in order to make up these numerous bipolar plate assemblies. In Figure 1c, a schematic is shown of the uppermost of the fuel and oxidant flow field plates in the inventive fuel cell stack.

For the most part, the flow field plates in Figures 1a through 1c are similar in design to conventional flow field plates. For instance, flow field plate 1 in Figure 1a comprises reactant flow field 4 on its reactant side Further, flow field plate 1 comprises a set of flow field plate ports for the stack fluids, including fuel inlet port 5, fuel outlet port 6, oxidant inlet port 7, oxidant outlet port 8, coolant inlet port 9 and coolant outlet port 10. In addition, flow field plate 1 comprises coolant degassing port 11. Because fuel inlet and outlet ports 5, 6 are typically smaller than those for the oxidant and coolant, coolant degassing port 11 can conveniently be located in the space adjacent thereto without needing to enlarge the flow field plate size to accommodate it.

In a like manner, flow field plate 2 in Figure 1b comprises coolant flow field 13 on its coolant side and the same set of flow field plate ports for each of the stack fluids, i.e. fuel inlet port 5, fuel outlet port 6, oxidant inlet port 7, oxidant outlet port 8, coolant inlet port 9, coolant outlet port 10, and coolant degassing port 11.

In Figure 1c, a schematic is shown of the uppermost of the fuel and oxidant flow field plates in the inventive fuel cell stack. Uppermost flow field plate 3 has certain features consistent with those of the reactant side of flow field plate 1, namely reactant flow field 4a, but is absent any of the set of flow field plate ports. Further, uppermost flow field plate 3 also comprises channel 12 which, when assembled into a fuel cell stack, will serve to fluidly connect the degassing coolant manifold (formed by the numerous stacked coolant degassing ports 11 after the numerous bipolar plate assemblies are stacked together) to the coolant outlet manifold (formed by the numerous coolant outlet ports 10 again after the numerous bipolar plate assemblies are stacked together).

Next, Figure 2 shows a simplified schematic cross-sectional side view of an inventive fuel cell stack comprising the various flow field plates shown in Figure 1. Fuel cell stack 15 comprises a plurality of essentially planar solid polymer electrolyte fuel cells 16 stacked in series. Stack 15 is oriented horizontally, i.e. such that the major planes of fuel cells 16 are oriented horizontally during intended operation. Stack 15 also comprises upper end plate 17 at its upper end and lower end plate 18 at its lower end. Here, a set of end plate fluid ports for each of the stack fluids is provided in lower end plate 18. In Figure 2, arrow 19a points to the location of coolant inlet end plate port (not visible in Figure 2) and also indicates the direction of coolant flow to stack 15. Arrow 20a points to the location of coolant outlet end plate port (not visible) and also indicates the direction of coolant flow from stack 15. Other end plate fluid ports for all the other inlet and outlet fluids are also provided in lower end plate 18, but arrows for these have been omitted from figure 2 (not called out) for simplicity and to reduce clutter. Thus, all the end plate fluid ports for stack 15 are provided in lower end plate 18 while upper end plate 17 is entirely absent any of the set of end plate fluid ports.

Once fuel cells 16 are stacked in series as shown, coolant inlet ports 9 in the flow field plates in each of the stacked cells align with the other coolant inlet ports 9 to create an internal coolant inlet manifold 19 for the coolant inlet fluid. In turn, coolant inlet manifold 19 is fluidly connected to its respective coolant inlet end plate port (as per arrow 19a).

In a like manner, coolant outlet ports 10 in the flow field plates in each of the stacked cells align with the other coolant outlet ports 10 to create an internal coolant outlet manifold 20 for the coolant outlet fluid. And, coolant outlet manifold 20 is fluidly connected to its respective coolant outlet end plate port (as per arrow 20a). Further, stacked coolant degassing ports 11 create an internal coolant degassing manifold 21 which is fluidly connected to its respective coolant degassing end plate port (as per arrow 21a). Further still, the other remaining stack inlet and outlet ports 5, 6, 7, 8 for the fuel and oxidant fluids in each of the stacked cells align in a respective manner.

As illustrated in Figure 2, channel 12 (in the uppermost of the fuel and oxidant flow field plates) fluidly connects coolant outlet manifold 20 to degassing coolant manifold 21. (While alternative embodiments outside of the invention may involve fluidly connecting coolant inlet manifold 19 to degassing coolant manifold 21, it may be slightly advantageous to employ the arrangement shown in Figure 2 because gas collecting in the coolant is naturally pushed in this direction during operation.)

For the most appropriate operation, the hydraulic diameter of degassing coolant manifold is chosen to be small enough such that slug flow results if a coolant mixture comprising both liquid and gas enters it.

Incorporating the coolant bleed design of the invention into a fuel cell stack desirably results in a small coolant flow out of the stack from its upper end that entrains and bleeds out any gas bubbles that have been collected in the circulating coolant. A particular advantage of this design is that all the stack fluid ports are on a single, i.e. the lower, end plate. The upper end plate thus does not need to be compatible with the stack fluids, thereby allowing for the use of alternative material choices, and additional fluid seals are not required at the upper end of the stack.

## Claims

1. A fuel cell stack (15) comprising:
a plurality of essentially planar solid polymer electrolyte fuel cells (16) stacked in series wherein:
the plane of the fuel cells is oriented horizontally in the fuel cell stack;
each fuel cell comprises:
a membrane electrode assembly comprising an anode and a cathode on opposite sides of a solid polymer membrane electrolyte;
a fuel flow field plate with a fuel flow field on a first major surface adjacent the anode in the membrane electrode assembly; and
an oxidant flow field plate with an oxidant flow field on a first major surface adjacent the cathode in the membrane electrode assembly;
a plurality of coolant flow fields (13) between each pair of adjacent fuel cells in the fuel cell stack wherein each coolant flow field (13) is formed by mating the second major surface of a fuel flow field plate in the pair with the second major surface of an adjacent oxidant flow field plate in the pair;
an upper end plate (17) at the upper end of the fuel cell stack;
a lower end plate (18) at the lower end of the fuel cell stack; and
a set of end plate fluid ports (19a, 20a, 21a) in one of the upper and lower end plates for each of the stack fluids wherein the stack fluids comprise a fuel inlet fluid, a fuel outlet fluid, an oxidant inlet fluid, an oxidant outlet fluid, a coolant inlet fluid, a coolant outlet fluid, and a coolant degassing fluid;
wherein
the lower end plate (18) comprises the set of end plate fluid ports;
except for the uppermost of the fuel and oxidant flow field plates (3) in the fuel cell stack, each of the fuel and oxidant flow field plates (1, 2) comprises a set of flow field plate ports (5, 6, 7, 8, 9, 10) for each of the stack fluids and each set of flow field plate ports aligns with the other sets of flow field plate ports in the fuel cell stack to create respective manifolds (19, 20, 21) for each stack fluid that are fluidly connected to their respective end plate fluid ports;
the upper end plate (17) is absent any of the set of end plate fluid ports;
the uppermost flow field plate (3) in the stack is absent any of the set of flow field plate ports;
the degassing coolant manifold (21) for the coolant degassing fluid is fluidly connected to the coolant outlet (20) manifold in the fuel cell stack,
wherein the coolant degassing flow field plate ports (11) are formed adjacent the coolant outlet flow field plate ports (10) in the fuel and oxidant flow field plates, whereby the degassing coolant manifold (21) is adjacent the coolant outlet manifold (20),
**characterized in that**:
the degassing coolant manifold (21) is fluidly connected to the coolant outlet manifold (20) via a channel (12) formed in the uppermost (3) of the fuel and oxidant flow field plates in the fuel cell stack.

2. The fuel cell stack of claim 1 wherein the hydraulic diameter of the degassing coolant manifold (21) is small enough to result in slug flow of a mixture of gas and coolant therein.

3. The fuel cell stack of claim 1 wherein the material of the upper end plate (17) is incompatible with contact with the stack fluids.

4. The fuel cell stack of claim 1 wherein the fuel cell stack is a heavy duty marine fuel cell stack.

## Patentansprüche

1. Brennstoffzellenstapel (15), umfassend:
eine Vielzahl von im Wesentlichen planaren Brennstoffzellen (16) mit festen Polymerelektrolyten, die in Reihe geschaltet sind, wobei:
die Ebene der Brennstoffzellen im Brennstoffzellenstapel horizontal ausgerichtet ist;
jede Brennstoffzelle umfasst:
eine Membranelektrodenanordnung mit einer Anode und einer Kathode auf gegenüberliegenden Seiten eines festen Polymermembranelektrolyten;
eine Brennstoffströmungsfeldplatte mit einem Brennstoffströmungsfeld auf einer ersten Hauptfläche neben der Anode in der Membranelektrodenanordnung; und
eine Oxidationsmittelströmungsfeldplatte mit einem Oxidationsmittelströmungsfeld auf einer ersten Hauptoberfläche neben der Kathode in der Membranelektrodenanordnung;
eine Vielzahl von Kühlmittelströmungsfeldern (13) zwischen jedem Paar benachbarter Brennstoffzellen in dem Brennstoffzellenstapel, wobei jedes Kühlmittelströmungsfeld (13) durch Zusammenfügen der zweiten Hauptoberfläche einer Brennstoffströmungsfeldplatte in dem Paar mit der zweiten Hauptoberfläche einer benachbarten Oxidationsmittelströmungsfeldplatte in dem Paar gebildet wird; eine obere Endplatte (17) am oberen Ende des Brennstoffzellenstapels;
eine untere Endplatte (18) am unteren Ende des Brennstoffzellenstapels; und
einen Satz von Endplattenfluidöffnungen (19a, 20a, 21a) in einer der oberen und unteren Endplatten für jedes der Stapelfluide, wobei die Stapelfluide ein Brennstoffeinlassfluid, ein Brennstoffauslassfluid, ein Oxidationsmitteleinlassfluid, ein Oxidationsmittelauslassfluid, ein Kühlmitteleinlassfluid, ein Kühlmittelauslassfluid und ein Kühlmittelentgasungsfluid umfassen;
wobei:
die untere Endplatte (18) einen Satz von Endplatten-Fluidanschlüssen umfasst;
mit Ausnahme der obersten der Brennstoff- und Oxidationsmittel-Strömungsfeldplatten (3) in dem Brennstoffzellenstapel, wobei jede der Brennstoff- und Oxidationsmittel-Strömungsfeldplatten (1, 2) einen Satz von Strömungsfeldplattenanschlüssen (5, 6, 7, 8, 9, 10) für jedes der Stapelfluide umfasst und jeder Satz von Strömungsfeldplattenanschlüssen mit den anderen Sätzen von Strömungsfeldplattenanschlüssen in dem Brennstoffzellenstapel ausgerichtet ist, um jeweilige Verteiler (19, 20, 21) für jedes Stapelfluid zu bilden, die mit ihren jeweiligen Endplattenfluidanschlüssen fluidisch verbunden sind;
die obere Endplatte (17) keinen der Sätze von Endplatten-Fluidanschlüssen aufweist;
die oberste Strömungsfeldplatte (3) in dem Stapel keinen der Sätze von Strömungsfeldplattenanschlüssen aufweist;
der Entgasungskühlmittelverteiler (21) für das Kühlmittelentgasungsfluid mit dem Kühlmittelauslassverteiler (20) im Brennstoffzellenstapel in Fluidverbindung steht,
wobei die Kühlmittelentgasungs-Strömungsfeldplattenöffnungen (11) benachbart zu den Kühlmittelauslass-Strömungsfeldplattenöffnungen (10) in den Brennstoff- und Oxidationsmittel-Strömungsfeldplatten ausgebildet sind, wodurch der Kühlmittelentgasungs-Sammler (21) benachbart zum Kühlmittelauslass-Sammler (20) ist,
**dadurch gekennzeichnet, dass**:
der Entgasungs-Kühlmittelverteiler (21) mit dem Kühlmittel-Auslassverteiler (20) über einen Kanal (12), der in der obersten (3) der Brennstoff- und Oxidationsmittel-Strömungsfeldplatten im Brennstoffzellenstapel ausgebildet ist, fluidmäßig verbunden ist.

2. Brennstoffzellenstapel nach Anspruch 1, bei dem der hydraulische Durchmesser des Entgasungs-Kühlmittelverteilers (21) klein genug ist, um zu einem Schwallstrom einer Mischung aus Gas und Kühlmittel darin zu führen.

3. Brennstoffzellenstapel nach Anspruch 1, wobei das Material der oberen Endplatte (17) unvereinbar für eine Berührung mit den Brennstoffzellenstapel-Flüssigkeiten ist.

4. Brennstoffzellenstapel nach Anspruch 1, wobei der Brennstoffzellenstapel ein Schwerlast-Brennstoffzellenstapel für die Schifffahrt ist.

## Revendications

1. Empilement de piles à combustible (15), comprenant:
une pluralité de piles à combustible sensiblement planes (16) à électrolyte polymère solide, connectées en série, dans lesquelles:
le plan des piles à combustible dans l'empilement des piles à combustible est horizontal,
chaque pile à combustible comprend:
un ensemble d'électrodes à membrane comprenant une anode et une cathode sur les côtés opposés d'un électrolyte solide à membrane polymère;
une plaque de champ d'écoulement de combustible ayant un champ d'écoulement de combustible sur une première surface principale adjacente à l'anode dans l'ensemble d'électrodes à membrane; et
une plaque de champ d'écoulement d'oxydant ayant un champ d'écoulement d'oxydant sur une première surface principale adjacente à la cathode dans l'ensemble d'électrodes à membrane;
une pluralité de champs d'écoulement de réfrigérant (13) entre chaque paire de piles à combustible adjacentes dans l'empilement de piles à combustible, chaque champ d'écoulement de réfrigérant (13) étant formé en joignant la seconde surface principale d'une plaque de champ d'écoulement de combustible dans la paire à la seconde surface principale d'une plaque de champ d'écoulement d'oxydant adjacente dans la paire ;
une plaque d'extrémité supérieure (17) à l'extrémité supérieure de l'empilement de piles à combustible ;
une plaque d'extrémité inférieure (18) à l'extrémité inférieure de l'empilement de piles à combustible;
et
un ensemble d'ouvertures de fluide de plaque d'extrémité (19a, 20a, 21a) dans l'une des plaques d'extrémité supérieure et inférieure pour chacun des fluides empilés, les fluides empilés comprenant un fluide d'entrée de combustible, un fluide de sortie de combustible, un fluide d'entrée d'oxydant, un fluide de sortie d'oxydant, un fluide d'entrée de réfrigérant, un fluide de sortie de réfrigérant et un fluide de dégazage de réfrigérant ;
où:
la plaque d'extrémité inférieure (18) comprend un ensemble de raccords fluidiques de plaque d'extrémité ;
à l'exception de la plus haute des plaques de champ d'écoulement de combustible et d'oxydant (3) dans l'empilement de piles à combustible, chacune des plaques de champ d'écoulement de combustible et d'oxydant (1, 2) comprend un ensemble de raccords de plaque de champ d'écoulement (5, 6, 7, 8, 9, 10) pour chacun des fluides de l'empilement, et chaque ensemble d'orifices de plaque de champ d'écoulement est aligné avec les autres ensembles d'orifices de plaque de champ d'écoulement dans l'empilement de piles à combustible pour former des collecteurs respectifs (19, 20, 21) pour chaque fluide de l'empilement, qui sont reliés de manière fluidique à leurs orifices de fluide de plaque d'extrémité respectifs ;
la plaque d'extrémité supérieure (17) n'a aucun des ensembles d'orifices de fluide de plaque d'extrémité ; la plaque de champ d'écoulement supérieure (3) dans l'empilement n'a aucun des ensembles d'orifices de plaque de champ d'écoulement;
le collecteur de réfrigérant de dégazage (21) pour le fluide de dégazage de réfrigérant est en communication fluidique avec le collecteur de sortie de réfrigérant (20) dans l'empilement de piles à combustible,
dans lequel les ouvertures de plaque de champ d'écoulement de dégazage de réfrigérant (11) sont formées de manière adjacente aux ouvertures de plaque de champ d'écoulement de sortie de réfrigérant (10) dans les plaques de champ d'écoulement de combustible et d'oxydant, moyennant quoi le collecteur de dégazage de réfrigérant (21) est adjacent au collecteur de sortie de réfrigérant (20),
**caractérisé en ce que** :
le distributeur de réfrigérant de dégazage (21) est relié fluidiquement au distributeur de sortie de réfrigérant (20) par un canal (12) formé dans la plaque de champ d'écoulement de combustible et d'oxydant la plus haute (3) dans l'empilement de piles à combustible.

2. Empilement de piles à combustible selon la revendication 1, dans lequel le diamètre hydraulique du collecteur de dégazage-refroidissement (21) est suffisamment petit pour entraîner un écoulement par aspiration d'un mélange de gaz et de réfrigérant dans celui-ci.

3. Empilement de piles à combustible selon la revendication 1, dans lequel le matériau de la plaque d'extrémité supérieure (17) ne doit pas entrer en contact avec les liquides de l'empilement.

4. Empilement de piles à combustible selon la revendication 1, dans lequel l'empilement de piles à combustible est un empilement de piles à combustible lourd destiné à la navigation.
